# EUROPEAN PATENT SPECIFICATION

(11) **EP 2 924 866 B1**
(45) Date of publication and mention of the grant of the patent: **01.11.2017**
(21) Application number: 14161400.8
(22) Date of filing: 25.03.2014
(51) Int. Cl.: H02M 5/458, B60L 11/00, B60L 11/08, B60L 11/12

(54) **An electrical power converter for a working machine**
Elektrischer Leistungswandler für eine Arbeitsmaschine
Convertisseur de puissance électrique pour machine de travail

(43) Date of publication of application: 30.09.2015
(73) Proprietor: Visedo Oy, 53600 Lappeenranta (FI)
(72) Inventor: Järveläinen, Tero, 53850 Lappeenranta (FI); Naumanen, Ville, 53830 Lappeenranta (FI)
(74) Representative: Finnpatent Oy

(56) References cited:
- US-A1- 2003 021 134
- US-A1- 2008 290 842

## Description

### Field of the invention

The invention relates to an electrical power converter that can be, for example but not necessarily, a part of an electromechanical power transmission chain of a working machine. Furthermore, the invention relates to a method and to a computer program for controlling an electrical power converter.

### Background

An electromechanical power transmission chain comprises typically one or more electrical machines and an electrical power converter. The electromechanical power transmission chain can be a series transmission chain where one of the electrical machines operates as generator and the electrical power converter is arranged to convert the voltage produced by the generator into voltages having amplitudes and frequencies suitable for the one or more other electrical machines. The generator can be driven with a combustion engine that can be e.g. a diesel engine, an Otto-cycle engine, or a turbine engine. Each of the one or more other electrical machines can be, for example, an electrical motor arranged to drive e.g. a wheel, a chain track, or some other actuator. It is also possible that the electromechanical power transmission chain is a parallel transmission chain where the generator is occasionally used as a motor that assists the combustion engine, especially when high output power is needed.

In many cases, the electrical power converter comprises a capacitive intermediate circuit capable of storing electrical energy. The electrical energy stored by the capacitive intermediate circuit can be used for smoothing loading of devices which supply electrical power to the capacitive intermediate circuit. In order to efficiently smooth the loading, the capacitive intermediate circuit should have a sufficient capacitance. The smoothing is especially advantageous during cyclic loading where the power taken out from the capacitive intermediate circuit varies cyclically. An exemplifying case causing cyclic loading is driving in a city center where repetitious accelerations and decelerations take place.

The capacitance of the intermediate circuit can be increased by using an electric double layer capacitor "EDLC" which is often called a "super-capacitor". This approach is, however, not free from challenges. One of the challenges is related to the maximum voltage of the capacitive intermediate circuit because it is expensive to construct an EDLC capacitor system for high voltages. The voltage of the capacitive intermediate circuit needs to be high for example in cases where an actuator, e.g. a wheel or a chain track, driven by an electromechanical power transmission chain operates at high speed. An exemplifying case where the actuator operates at high speed is driving along a highway.

Publication US2008290842 describes an energy storage circuit that comprises a battery, a capacitor, and a controllable switch. With the aid of the controllable switch it is possible to connect the battery to be in parallel with the capacitor when the voltage of the capacitor tends to drop below the voltage of the battery.

Publication US2003021134 describes a power supply circuit that comprises a rectifier supplied with alternating voltage, a first capacitor for smoothing the rectified voltage delivered by the rectifier, and load terminals to which the rectified and smoothed voltage is applied. The power supply circuit further comprises a second capacitor connected by a switching element to the load terminals so that, when the voltage of the load terminals drops below a voltage threshold, the second capacitor is connected to the load terminals.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new electrical power converter according to claim 1 that can be, for example but not necessarily, a part of an electromechanical power transmission chain of a working machine.

An electrical power converter according to the invention comprises a capacitive intermediate circuit and at least one converter-stage for converting direct voltage between first and second poles of the capacitive intermediate circuit into at least one output voltage suitable for at least one electrical machine, and a second converter stage for converting a voltage received from an external electrical system into the first direct voltage. The capacitive intermediate circuit comprises:
- a first capacitive element connected to the first and second poles of the capacitive intermediate circuit,
- a second capacitive element connected to the second pole of the capacitive intermediate circuit and having capacitance greater than the capacitance of the first capacitive element, maximum allowable voltage of the first capacitive element being higher than maximum allowable voltage of the second capacitive element, and
- a controllable switch connected to the second capacitive element and to the first pole of the capacitive intermediate circuit.

The electrical power converter further comprises a controller for controlling the controllable switch to be:
- in the conductive state so as to utilize the energy storage capacity of the second capacitive element when each of one or more predetermined conditions is fulfilled, and otherwise
- in the non-conductive state so as to allow the direct voltage to be higher than the maximum allowable voltage of the second capacitive element.

The above-mentioned one or more predetermined conditions comprise at least a requirement that the direct voltage is on or below a voltage limit that is at most the maximum allowable voltage of the second capacitive element. Furthermore, the controller is adapted to set, at least partly in accordance with the output voltage, a reference value of the direct voltage to be one of the following: a first reference value below the voltage limit, a second reference value above the voltage limit.

In the above-described electrical power converter, the second capacitive element having the greater capacitance but lower maximum allowable voltage can be utilized during cyclic loading where greater energy storage is needed but the voltage is typically lower, and the second capacitive element can be switched off in situations where the voltage is higher but the loading is smoother and thus smaller energy storage is sufficient.

The first capacitive element may comprise for example one or more electrolytic capacitors, and the second capacitive element may comprise for example one or more electric double layer capacitors "EDLC", i.e. one or more so called "super capacitors".

In accordance with the invention, there is provided also a new working machine that can be, for example but not necessarily, a tractor, a bucket charger, a road drag, an excavator, a bulldozer, a stone crusher, or a wood chipping machine. The working machine according to the invention comprises:
- a combustion engine, and
- an electromechanical power transmission chain between the combustion engine and one or more actuators, e.g. wheels and/or chain tracks, of the mobile working machine.

The above-mentioned electromechanical transmission chain comprises at least one electrical power converter according to the present invention.

The working machine may comprise a hydraulic system for driving some actuators of the working machine, e.g. a bucket of a bucket charger. In this case, the working machine comprises advantageously a liquid cooling system arranged to cool both the hydraulic system and the electromechanical power transmission chain.

In accordance with the invention, there is provided also a new method for controlling an electrical power converter that comprises a capacitive intermediate circuit and at least one converter-stage for converting direct voltage between first and second poles of the capacitive intermediate circuit into at least one output voltage suitable for at least one electrical machine, and a second converter stage for converting a voltage received from an external electrical system into the first direct voltage, wherein the capacitive intermediate circuit comprises:
- a first capacitive element connected to the first and second poles of the capacitive intermediate circuit,
- a second capacitive element connected to the second pole of the capacitive intermediate circuit and having capacitance greater than the capacitance of the first capacitive element, maximum allowable voltage of the first capacitive element being higher than maximum allowable voltage of the second capacitive element, and
- a controllable switch connected to the second capacitive element and to the first pole of the capacitive intermediate circuit.

The method comprises:
- controlling the controllable switch to be in the conductive state so as to utilize the energy storage capacity of the second capacitive element when each of one or more predetermined conditions is fulfilled, and otherwise
- controlling the controllable switch to be in the non-conductive state so as to allow the direct voltage to be higher than the maximum allowable voltage of the second capacitive element.

The above-mentioned one or more predetermined conditions comprise at least a requirement that the direct voltage is on or below a voltage limit that is at most the maximum allowable voltage of the second capacitive element. Furthermore, the method comprises setting, at least partly in accordance with the output voltage, a reference value of the direct voltage to be one of the following: a first reference value below the voltage limit, a second reference value above the voltage limit.

In accordance with the invention, there is provided also a new computer program comprising instructions to cause the above-described electrical power converter to execute the steps of the above described method. A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figure 1 shows a schematic illustration of an electromechanical power transmission chain that comprises an electrical power converter according to an exemplifying and non-limiting embodiment of the invention,
figure 2 shows a schematic illustration of a working machine according to an exemplifying and non-limiting embodiment of the invention, and
figure 3 shows a flow chart of a method according to an exemplifying and non-limiting embodiment of the invention for controlling an electrical power converter.

### Description of the exemplifying and non-limiting embodiments

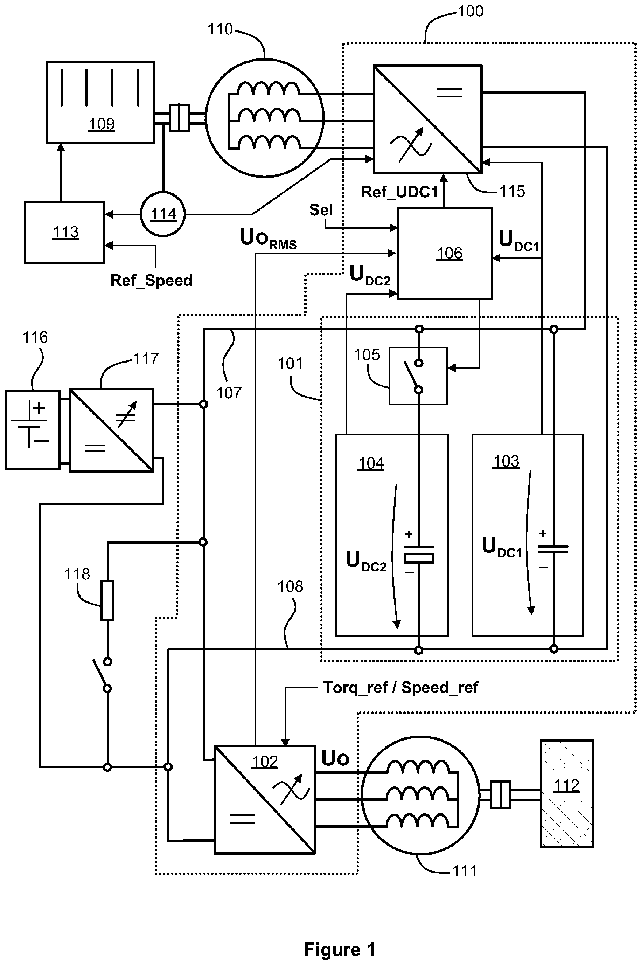

Figure 1 shows a schematic illustration of an electromechanical power transmission chain that comprises an electrical power converter 100 according to an exemplifying and non-limiting embodiment of the invention. The electromechanical power transmission chain comprises a combustion engine 109 that can be e.g. a diesel engine, an Otto-cycle engine, or a turbine engine. The electromechanical power transmission chain comprises a generator 110 that is driven with the combustion engine 109. The electrical power converter 100 is connected to the winding of the generator 110 and the electrical power converter is adapted to convert the voltage of the generator 110 into a form suitable for an electrical machine 111 which is adapted to drive an actuator 112. It is also possible that there is a gearbox for delivering mechanical power between the electrical machine 111 and the actuator 112. The actuator 112 can be, for example but not necessarily, a wheel, a chain track, a hydraulic pump, a cutter of a wood chipping machine, or some other actuator. The actuator 112 can be driven in a torque controlled mode according to a target value Torq_ref of the torque directed to the actuator or in a speed controlled mode according to a target value Speed_ref of the rotational speed of the actuator. In the exemplifying case illustrated in figure 1, it is assumed that the combustion engine 109 is operated in a speed controlled mode according to a target value Ref_Speed of the rotational speed of the combustion engine. A controller 113 is adapted to control the operation of the combustion engine 107 on the basis of the target value Ref_Speed and an output signal of a rotational speed indicator 114. In order to improve the accuracy of the control of the generator 110, the output signal of the rotational speed indicator 114 can be utilized also in the control of the electrical power converter 100. The target value Ref_Speed can be arranged to be dependent, according to a pre-determined rule, on the output power needed to be generated by the combustion engine 109 for example so that the efficiently of the combustion engine is optimized at each output power of the combustion engine.

The electrical power converter 100 comprises a capacitive intermediate circuit 101 and a first converter-stage 102 for converting direct voltage U_{DC1} between first and second poles 107 and 108 of the capacitive intermediate circuit into three-phase output voltage Uo suitable for the electrical machine 111. It is also possible that the electrical power converter 100 comprises two or more converter-stages for converting the direct voltage U_{DC1} into output voltages of two or more electrical machines driving two or more actuators. In the exemplifying case illustrated in figure 1, the electrical machine 111 is a three-phase alternating current "AC" machine but it is also possible that the electrical machine is a direct current "DC" machine. The capacitive intermediate circuit 101 comprises a first capacitive element 103 connected to the first and second poles 107 and 108 of the capacitive intermediate circuit. The capacitive element 103 may comprise for example one or more electrolytic capacitors. The capacitive intermediate circuit 101 comprises a second capacitive element 104 connected to the second pole 108 of the capacitive intermediate circuit. The capacitance of the capacitive element 104 is greater than the capacitance of the capacitive element 103, but the maximum allowable voltage of the capacitive element 104 is smaller than the maximum allowable voltage of the capacitive element 103. The capacitive element 104 may comprise for example one or more electric double layer capacitors "EDLC". The capacitive intermediate circuit 101 comprises a controllable switch 105 connected to the second capacitive element 103 and to the first pole 107 of the capacitive intermediate circuit. In the exemplifying case illustrated in figure 1, the positive pole of the capacitive intermediate circuit 101 is the above-mentioned first pole and the negative pole of the capacitive intermediate circuit is the above-mentioned second pole. It is worth noting that the first pole connected to the controllable switch could as well be the negative pole of the capacitive intermediate circuit, i.e. the controllable switch could as well be between the capacitive element 104 and the negative pole of the capacitive intermediate circuit. It is also possible that the capacitive intermediate circuit comprises two controllable switches so that one of them is between the capacitive element 104 and the positive pole and the other is between the capacitive element 104 and the negative pole. The electrical power converter comprises a controller 106 for controlling the controllable switch 105 to be conductive when each of one or more predetermined conditions is fulfilled and otherwise to be non-conductive. The one or more predetermined conditions comprises at least a requirement that the direct voltage U_{DC1} is on or below a voltage limit U_{LIM} that is at most the maximum allowable voltage U_{MAX} of the capacitive element 104. Therefore, when the direct voltage U_{DC1} is on or below the voltage limit U_{LIM} and the possible other conditions are fulfilled, the capacitive element 104 is connected to the first pole 107 so as to utilize the energy storage capacity of the capacitive element 104, and in other cases the capacitive element 104 is disconnected from the first pole 107 so as to allow the direct voltage U_{DC1} to be higher than the maximum allowable voltage U_{MAX} of the capacitive element 104.

In an electrical power converter according to an exemplifying and non-limiting embodiment of the invention, the controller 106 is adapted to change the controllable switch 105 from the conductive state to the non-conductive state when the direct voltage U_{DC1} increases and passes the voltage limit U_{LIM} and to change the controllable switch 105 from the non-conductive state to back the conductive state when the direct voltage U_{DC1} decreases and passes the voltage limit U_{LIM}. An inherent challenge of this approach is the tendency to oscillate between the conductive state and the non-conductive state when the direct voltage U_{DC1} fluctuates around the voltage limit U_{LIM}. In order to eliminate the oscillation, it is possible to arrange hysteresis so that a first voltage limit U_{LIM1} is used for changes from the conductive state to the non-conductive state and a second voltage limit U_{LIM2} differing from U_{LIM1} is used for changes from the non-conductive state to the conductive state. In this case, however, the capacitive element 104 would be connected to direct voltage corresponding to the second voltage limit U_{LIM2} that is different from the direct voltage corresponding to the first voltage limit U_{LIM1} and prevailing when the capacitive element 104 was disconnected. In some cases, a difference between the direct voltage U_{DC1} and the direct voltage U_{DC2} of the capacitive element 104 can be handled so that the controllable switch 105 is a three-state switch which has the non-conductive state, a current limiting state, and the conductive state. The three-state switch comprises a current limiting component that is between the capacitive element 104 and the first pole 107 when the three-state switch is in the current limiting state. In cases where the first voltage limit U_{LIM1} is greater than the second voltage limit U_{LIM2}, it is also possible to provide the capacitive element 104 with a switchable parallel resistor for decreasing the direct voltage U_{DC2} down to U_{LIM2} when the controllable switch 105 is in the non-conductive state. The oscillation between the conductive state and the non-conductive state can be limited also so that the controller 106 is adapted to prevent the controllable switch 105 from changing from the non-conductive state to the conductive state for a predetermined time after each change from the conductive state to the non-conductive state. In this case, one of the conditions to be fulfilled prior to controlling the controllable switch 105 to the conductive state is the requirement that the controllable switch 105 is non-conductive at least for the predetermined time after each change from the conductive state to the non-conductive state.

In an electrical power converter according to an exemplifying and non-limiting embodiment of the invention, the controller 106 is adapted to set a reference value Ref_U_{DC1} of the direct voltage U_{DC1} to the prevailing value of the direct voltage U_{DC2} of the capacitive element 104 when there is a need to change the controllable switch 105 from the non-conductive state to the conductive state. The controller 106 is adapted to wait until a difference between the direct voltages U_{DC1} and U_{DC2} is below a threshold value ε, i.e. ABS(U_{DC1} - U_{DC2}) < ε, prior to changing the controllable switch 105 from the non-conductive state to the conductive state. The above-described procedure reduces equalizing current which flows between the capacitive elements 103 and 104 just after the controllable switch 105 has become conductive. In the exemplifying case illustrated in figure 1, the controller 106 is adapted to deliver the reference value Ref_U_{DC1} to a second converter stage 115 which is adapted to convert the three-phase voltage received from the generator 110 into the direct voltage U_{DC1} in accordance with the reference value Ref__{UDC1}. It is also possible that the controller is adapted to deliver a control signal indicative of the reference value Ref_U_{DC1} to an external device adapted to control the direct voltage U_{DC1}. In this case, the converter stage 115 can be for example a diode bridge and the direct voltage U_{DC1} can be controlled by adjusting the excitation and the rotational speed of the generator 110.

In an electrical power converter according to an exemplifying and non-limiting embodiment of the invention, the controller 106 is adapted to receive a selection signal Sel which determines an operational mode. In a first operational mode, the controller 106 is adapted to set the reference value Ref_U_{DC1} of the direct voltage U_{DC1} to be a first reference value Ref1_U_{Dc1} that is below the voltage limit U_{LIM}. In a second operational mode, the controller 106 is adapted to set the reference value Ref_U_{DC1} to be a second reference value Ref2_U_{DC1} that is above the voltage limit U_{LIM}. The controllable switch 105 can be operated for example so that the controllable switch is all the time non-conductive in the second operational mode where the reference value Ref_U_{DC1} is above the voltage limit U_{LIM}. In the first operational mode where the reference value Ref_U_{DC1} is below the voltage limit U_{LIM}, the controllable switch 105 can be kept in the conductive state when the direct voltage U_{DC1} is below the voltage limit U_{LIM} and in the non-conductive state when the direct voltage U_{DC1} is above the voltage limit U_{LIM}. The first reference value Ref1_U_{DC1} and the control-loop for controlling the direct voltage U_{DC1} are advantageously selected and designed so that, in the first operational mode, the direct voltage U_{DC1} exceeds the voltage limit in exceptional situations only. For example, the control gain of the control loop can be increased when the direct voltage U_{DC1} increases and approaches the voltage limit U_{LIM}.

In an electrical power converter according to an exemplifying and non-limiting embodiment of the invention, the controller 106 is adapted set, in accordance with the output voltage Uo, the reference value Ref_U_{DC1} of the direct voltage U_{DC1} to be either the first reference value Ref1_U_{DC1} that is below the voltage limit U_{LIM} or the second reference value Ref2_U_{DC1} that is above the voltage limit U_{LIM}. The reference value Ref_U_{DC1} can be selected, for example, so that the reference value Ref_U_{DC1} is the first reference value Ref1_U_{DC1} when the root-mean-square "RMS" of the output voltage Uo is below a limit Uo_{LIM} and otherwise the reference value Ref_U_{DC1} is the second reference value Ref2_U_{DC1}. An inherent challenge of this approach is that the reference value Ref2_U_{DC1} oscillates back and forth between the first and second reference values Ref1_U_{DC1} and Ref2_U_{DC1} when the root-mean-square "RMS" of the output voltage Uo fluctuates around the limit Uo-_{LIM}. In order to eliminate the oscillation, it is possible to arrange hysteresis so that a first limit Uo_{LIM1} is used for changes from the first reference value Ref1_U_{DC1} to the second reference value Ref2_U_{DC1} and a second limit Uo_{LIM2} differing from Uo_{LIM1} is used for changes from the second reference value Ref2_U_{DC1} to the first reference value Ref1_U_{DC1}. The controllable switch 105 can be operated for example so that the controllable switch is all the time non-conductive when the reference value Ref_U_{DC1} is the second reference value Ref2_U_{DC1} that is above the voltage limit U_{LIM}. When the reference value Ref_U_{DC1} is the first reference value Ref1_U_{DC1} below the voltage limit U_{LIM}, the controllable switch 105 can be kept in the conductive state when the direct voltage U_{DC1} is on or below the voltage limit U_{LIM} and in the non-conductive state when the direct voltage U_{DC1} is above the voltage limit U_{LIM}. The first reference value Ref1_U_{DC1} and the control-loop for controlling the direct voltage U_{DC1} are advantageously selected and designed so that, when the reference value Ref_U_{DC1} is the first reference value Ref1_U_{DC1}, the direct voltage U_{DC1} exceeds the voltage limit in exceptional situations only.

It is to be noted that the above-presented ways to control the controllable switch 105 are only exemplifying and non-limiting ways, and there can be many other ways to control the controllable switch 105 so that, when the direct voltage U_{DC1} is on or below the voltage limit U_{LIM} and possible other conditions are fulfilled, the controllable switch is conductive and thus more energy storage capacity is available, and otherwise the controllable switch is non-conductive and higher voltage can be used. Furthermore, the above-presented exemplifying and non-limited ways to control the controllable switch can be combined for example so that the reference value Ref_U_{DC1} is selected on the basis of both the output voltage Uo and the selection signal Sel so that the second reference value Ref2_U_{DC1} that is above the voltage limit U_{LIM} is used only when both the output voltage Uo and the selection signal Sel indicate the use of the second reference value Ref2_U_{DC1}. An electrical power converter according to an embodiment of the invention can be a part of an electromechanical power transmission chain of a mobile working machine or another mobile device. In this case, the controllable switch can be controlled in accordance with driving speed for example so that the controllable switch is conductive at low driving speeds if other conditions are fulfilled and non-conductive at higher driving speeds.

The controller 106 of the electrical power converter 100 can be implemented with one or more processor circuits, each of which can be a programmable processor circuit provided with appropriate software, a dedicated hardware processor such as, for example, an application specific integrated circuit "ASIC", or a configurable hardware processor such as, for example, a field programmable gate array "FPGA".

In some situations, e.g. during braking, the electrical machine 111 may operate as a generator that may charge the capacitive intermediate circuit 101 so strongly that the capacitive intermediate circuit is not sufficient for storing the generated electrical energy. In order to store the generated electrical energy, the electromechanical power transmission chain can be provided with a battery element 116 and a controllable direct voltage converter 117. The energy stored by the battery element can be arranged to respond to peak power needs exceeding the maximum power available from the combustion engine 107 and from the capacitive intermediate circuit 101. Furthermore, the electromechanical power transmission chain can be provided with a brake resistor 118 for absorbing a part of the braking energy in situations where it is not possible to supply all the braking energy to the battery element and/or to the capacitive intermediate circuit 101.

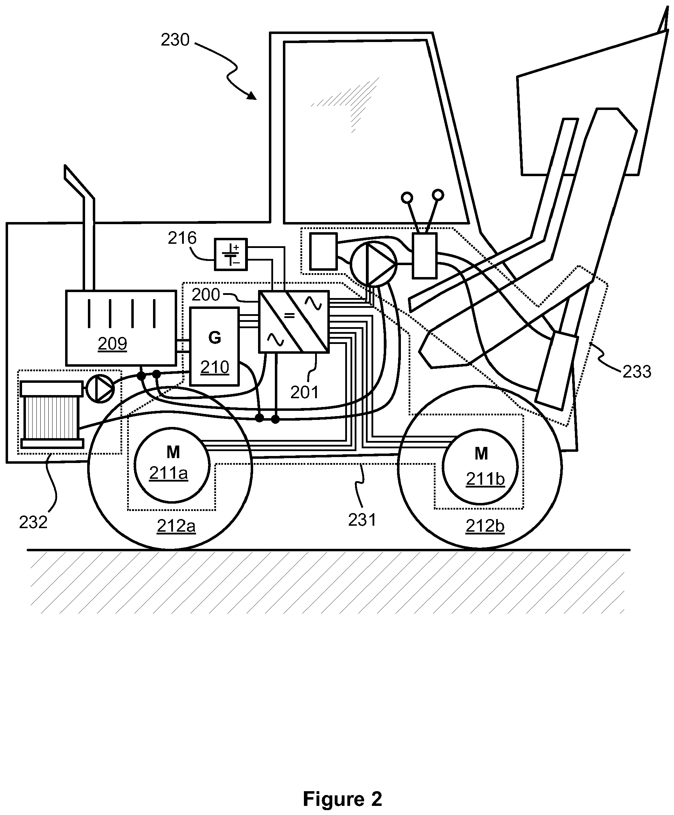

Figure 2 shows a schematic illustration of a mobile working machine 230 according to an exemplifying and non-limiting embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 209 that can be e.g. a diesel engine, an Otto-cycle engine, or a turbine engine. The mobile working machine comprises an electromechanical power transmission chain 231 between the combustion engine and wheels 212a, 212b of the mobile working machine. The electromechanical transmission chain comprises an electrical machine 210 the rotor of which is connected to the shaft of the combustion engine 209. The electromechanical transmission chain further comprises electrical machines 211a, 211b at hubs of the wheels 212a, 212b. The electromechanical drive comprises an electrical power converter 200. In this exemplifying case, the electrical power converter 200 is a frequency converter. The electrical power converter 200 is adapted to convert the electrical voltage produced by the electrical machine 210 into electrical voltages having amplitudes and frequencies suitable for the electrical machines 211a, 211b. The electrical power converter 200 may have separate converter stages for all the electrical machines 211a, 211b in which case each of these electrical machines can be controlled individually, or all the electrical machines 211a, 211b can be connected to one and the same converter stage of the frequency converter in which case these electrical machines are controlled as a group. The electrical power converter 200 comprises a capacitive intermediate circuit 201 that comprises:
- a first capacitive element connected to first and second poles of the capacitive intermediate circuit,
- a second capacitive element, e.g. an electric double layer capacitor "EDLC" element, connected to the second pole of the capacitive intermediate circuit and having capacitance greater than the capacitance of the first capacitive element, the maximum allowable voltage of the first capacitive element being higher than the maximum allowable voltage of the second capacitive element, and
- a controllable switch connected to the second capacitive element and to the first pole of the capacitive intermediate circuit.

The electrical power converter 200 further comprises a controller for controlling the controllable switch to be in the conductive state when each of one or more predetermined conditions is fulfilled and otherwise to be in the non-conductive state. The one or more predetermined conditions comprise at least a requirement that the direct voltage of the capacitive intermediate circuit is on or below a voltage limit that is at most the maximum allowable voltage of the second capacitive element.

A mobile working machine according to an exemplifying and non-limiting embodiment of the invention comprises a liquid cooling system 232 arranged to cool the electromechanical power transmission chain 231.

A mobile working machine according to an exemplifying and non-limiting embodiment of the invention comprises a liquid cooling system arranged to cool both a hydraulic system 233 of the mobile working machine and the electromechanical power transmission chain 231.

A mobile working machine according to an exemplifying and non-limiting embodiment of the invention comprises a liquid cooling system arranged to cool both the electromechanical power transmission chain 231 and the combustion engine 209.

In a mobile working machine according to an exemplifying and non-limiting embodiment of the invention, the electromechanical power transmission chain comprises a battery element 216 arranged to respond to peak power needs exceeding the maximum power available from the combustion engine 209 and from the capacitive intermediate circuit 201. The battery element can be connected, for example, to the capacitive intermediate circuit 201 with the aid of a controllable direct voltage converter.

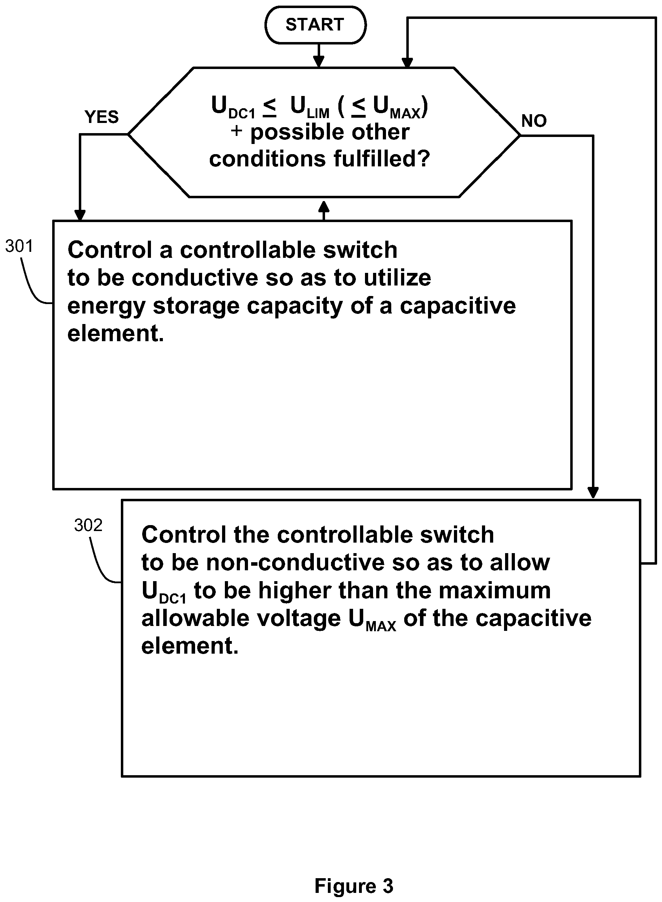

Figure 3 shows a flow chart of a method according to an exemplifying and non-limiting embodiment of the invention for controlling an electrical power converter that comprises a capacitive intermediate circuit and at least one first converter-stage for converting first direct voltage U_{DC1} between first and second poles of the capacitive intermediate circuit into at least one output voltage suitable for at least one electrical machine, wherein the capacitive intermediate circuit comprises:
- a first capacitive element connected to the first and second poles of the capacitive intermediate circuit,
- a second capacitive element connected to the second pole of the capacitive intermediate circuit and having capacitance greater than the capacitance of the first capacitive element, maximum allowable voltage of the first capacitive element being higher than maximum allowable voltage U_{MAX} of the second capacitive element, and
- a controllable switch connected to the second capacitive element and to the first pole of the capacitive intermediate circuit.

The method comprises the following actions:
- action 301: controlling the controllable switch to be in the conductive state so as to utilize the energy storage capacity of the second capacitive element when each of one or more predetermined conditions is fulfilled, and otherwise
- action 302: controlling the controllable switch to be in the non-conductive state so as to allow the first direct voltage U_{DC1} to be higher than the maximum allowable voltage U_{MAX} of the second capacitive element.

The above-mentioned one or more predetermined conditions comprise at least a requirement that the first direct voltage U_{DC1} is on or below a voltage limit U_{LIM} that is at most the maximum allowable voltage U_{MAX} of the second capacitive element.

A method according to an exemplifying and non-limiting embodiment of the invention comprises delivering the reference value of the first direct voltage to a second converter stage of the electrical power converter, where the second converter stage is adapted to convert voltage received from an external electrical system into the first direct voltage in accordance with the reference value. A method according to another exemplifying and non-limiting embodiment of the invention comprises delivering a control signal indicative of the reference value of the first direct voltage to an external device adapted to control the first direct voltage.

A method according to an exemplifying and non-limiting embodiment of the invention comprises setting the reference value of the first direct voltage to the prevailing value of second direct voltage U_{DC2} of the second capacitive element in response to a situation where the first direct voltage is on or below the voltage limit and the controllable switch is in the non-conductive state. In this case, the above-mentioned predetermined conditions comprise a requirement that a difference between the first and second direct voltages must be below a threshold value prior to changing the controllable switch to the conductive state.

In a method according to an exemplifying and non-limiting embodiment of the invention, the above-mentioned predetermined conditions comprise a requirement that, in cases where there has been at least one change of the controllable switch from the conductive state to the non-conductive state, a predetermined time must have elapsed since the most recent change of the controllable switch from the conductive state to the non-conductive state prior to changing the controllable switch to the conductive state.

A method according to an exemplifying and non-limiting embodiment of the invention comprises receiving a selection signal and setting, at least partly in accordance with the selection signal, the reference value of the first direct voltage to be one of the following: a first reference value below the voltage limit, a second reference value above the voltage limit.

A method according to an exemplifying and non-limiting embodiment of the invention comprises setting, at least partly in accordance with the output voltage of the electrical power converter, the reference value of the first direct voltage to be one of the following: a first reference value below the voltage limit, a second reference value above the voltage limit.

In order to avoid oscillation between the first and second reference values, a method according to an exemplifying and non-limiting embodiment of the invention comprises:
- changing the reference value of the first direct voltage from the first reference value to the second reference value when the root-mean-square of the output voltage increases and passes a first limit, and
- changing the reference value of the first direct voltage from the second reference value to the first reference value when the root-mean-square of the output voltage decreases and passes a second limit differing from the first limit.

A computer program according to an exemplifying and non-limiting embodiment of the invention comprises computer executable instructions for controlling a programmable processing system to carry out actions related to a method according to any of the above-described exemplifying embodiments of the invention.

A computer program according to an exemplifying and non-limiting embodiment of the invention comprises software modules for controlling an electrical power converter that comprises a capacitive intermediate circuit and at least one converter-stage for converting direct voltage between first and second poles of the capacitive intermediate circuit into at least one output voltage suitable for at least one electrical machine, wherein the capacitive intermediate circuit comprises:
- a first capacitive element connected to the first and second poles of the capacitive intermediate circuit,
- a second capacitive element connected to the second pole of the capacitive intermediate circuit and having capacitance greater than the capacitance of the first capacitive element, maximum allowable voltage of the first capacitive element being higher than maximum allowable voltage of the second capacitive element, and
- a controllable switch connected to the second capacitive element and to the first pole of the capacitive intermediate circuit.

The above-mentioned software modules comprise computer executable instructions for controlling a programmable processing system of the electrical power converter to:
- controlling the controllable switch to be in the conductive state so as to utilize the energy storage capacity of the second capacitive element when each of one or more predetermined conditions is fulfilled, and otherwise
- controlling the controllable switch to be in the non-conductive state so as to allow the direct voltage to be higher than the maximum allowable voltage of the second capacitive element.

The above-mentioned one or more predetermined conditions comprise at least a requirement that the direct voltage is on or below a voltage limit that is at most the maximum allowable voltage of the second capacitive element.

The software modules can be e.g. subroutines or functions implemented with a suitable programming language and with a compiler suitable for the programming language and for the above-mentioned programmable processing system.

A computer program product according to an exemplifying and non-limiting embodiment of the invention comprises a computer readable medium, e.g. a compact disc "CD", encoded with a computer program according to an exemplifying embodiment of invention.

A signal according to an exemplifying and non-limiting embodiment of the invention is encoded to carry information defining a computer program according to an exemplifying embodiment of invention.

The specific examples provided in the description given above should not be construed as limiting the scope and/or the applicability of the appended claims.

## Claims

1. An electrical power converter (100) comprising a capacitive intermediate circuit (101), at least one first converter-stage (102) for converting first direct voltage between first and second poles (107, 108) of the capacitive intermediate circuit into at least one output voltage suitable for at least one electrical machine, and a second converter stage (115) for converting a voltage received from an external electrical system into the first direct voltage, wherein the capacitive intermediate circuit (101) comprises:
- a first capacitive element (103) connected to the first and second poles of the capacitive intermediate circuit,
- a second capacitive element (104) connected to the second pole of the capacitive intermediate circuit and having capacitance greater than capacitance of the first capacitive element, maximum allowable voltage of the first capacitive element being higher than maximum allowable voltage of the second capacitive element, and
- a controllable switch (105) connected to the second capacitive element and to the first pole of the capacitive intermediate circuit,
the electrical power converter further comprising a controller (106) for controlling the controllable switch to be in conductive state when each of one or more predetermined conditions is fulfilled and otherwise to be in non-conductive state, the one or more predetermined conditions comprising at least a requirement that the first direct voltage is on or below a voltage limit that is at most the maximum allowable voltage of the second capacitive element, wherein the controller is adapted to set, at least partly in accordance with the output voltage, a reference value of the first direct voltage to be one of the following: a first reference value below the voltage limit, a second reference value above the voltage limit.

2. An electrical power converter according to claim 1, wherein the controller is adapted set the reference value of the first direct voltage to a prevailing value of second direct voltage of the second capacitive element in response to a situation where the first direct voltage is on or below the voltage limit and the controllable switch is in the non-conductive state, one of the predetermined conditions being a requirement that a difference between the first and second direct voltages is below a threshold value.

3. An electrical power converter according to claim 1 or 2, wherein the controller is adapted to receive a selection signal and to set, at least partly in accordance with the selection signal, the reference value of the first direct voltage to be one of the following: the first reference value below the voltage limit, the second reference value above the voltage limit.

4. An electrical power converter according to claim 1, wherein and the controller is adapted to:
- change the reference value of the first direct voltage from the first reference value to the second reference value when root-mean-square of the output voltage increases and passes a first limit, and
- change the reference value of the first direct voltage from the second reference value to the first reference value when the root-mean-square of the output voltage decreases and passes a second limit differing from the first limit.

5. An electrical power converter according to any of claims 1-4, wherein the controller is adapted to deliver the reference value of the first direct voltage to a second converter stage (115) of the electrical power converter, the second converter stage being adapted to convert voltage received from an external electrical system into the first direct voltage in accordance with the reference value of the first direct voltage.

6. An electrical power converter according to any of claims 1-4, wherein the controller is adapted to deliver a control signal indicative of the reference value of the first direct voltage to an external device adapted to control the first direct voltage.

7. An electrical power converter according to any of claims 1-6, wherein the predetermined conditions comprise a requirement that, in cases where there has been at least one change of the controllable switch from the conductive state to the non-conductive state, a predetermined time has elapsed since a most recent change of the controllable switch from the conductive state to the non-conductive state.

8. An electrical power converter according to any of claims 1-7, wherein the second capacitive element comprises at least one electric double layer capacitor EDLC.

9. A mobile working machine (230) comprising:
- a combustion engine (209), and
- an electromechanical power transmission chain (231) between the combustion engine and one or more actuators of the mobile working machine,
wherein the electromechanical transmission chain comprises at least one electrical power converter (201) according to any of claims 1-8.

10. A method for controlling an electrical power converter that comprises a capacitive intermediate circuit, at least one first converter-stage for converting first direct voltage between first and second poles of the capacitive intermediate circuit into at least one output voltage suitable for at least one electrical machine, and a second converter stage (115) for converting a voltage received from an external electrical system into the first direct voltage, wherein the capacitive intermediate circuit comprises:
- a first capacitive element connected to the first and second poles of the capacitive intermediate circuit,
- a second capacitive element connected to the second pole of the capacitive intermediate circuit and having capacitance greater than capacitance of the first capacitive element, maximum allowable voltage of the first capacitive element being higher than maximum allowable voltage of the second capacitive element, and
- a controllable switch connected to the second capacitive element and to the first pole of the capacitive intermediate circuit,
the method comprising controlling (301) the controllable switch to be in conductive state when each of one or more predetermined conditions is fulfilled and otherwise controlling (302) the controllable switch to be in non-conductive state, the one or more predetermined conditions comprising at least a requirement that the first direct voltage is on or below a voltage limit that is at most the maximum allowable voltage of the second capacitive element, wherein the method comprises setting, at least partly in accordance with the output voltage, a reference value of the first direct voltage to be one of the following: a first reference value below the voltage limit, a second reference value above the voltage limit.

11. A method according to claim 10, wherein the method comprises setting the reference value of the first direct voltage to a prevailing value of second direct voltage of the second capacitive element in response to a situation where the first direct voltage is on or below the voltage limit and the controllable switch is in the non-conductive state, the predetermined conditions comprising a requirement that a difference between the first and second direct voltages is below a threshold value.

12. A method converter according to claim 10 or 11, wherein the method comprises receiving a selection signal and setting, at least partly in accordance with the selection signal, the reference value of the first direct voltage to be one of the following: the first reference value below the voltage limit, the second reference value above the voltage limit.

13. A computer program comprising instructions to cause the electrical power converter of claim 1 to execute the steps of the method of claim 10.

## Patentansprüche

1. Elektrischer Leistungswandler (100), umfassend eine kapazitive Zwischenschaltung (101), wenigstens eine erste Wandlerstufe (102) zum Wandeln einer ersten Gleichspannung zwischen ersten und zweiten Polen (107, 108) der kapazitiven Zwischenschaltung in wenigstens eine Ausgabespannung, welche für wenigstens eine elektrische Maschine geeignet ist, und eine zweite Wandlerstufe (115) zum Wandeln einer Spannung, welche von einem externen elektrischen System empfangen wird, in die erste Gleichspannung, wobei die kapazitive Zwischenschaltung (101) umfasst:
- ein erstes kapazitives Element (103), welches mit den ersten und zweiten Polen der kapazitiven Zwischenschaltung verbunden ist,
- ein zweites kapazitives Element (104), welches mit dem zweiten Pol der kapazitiven Zwischenschaltung verbunden ist und eine Kapazitanz aufweist, welche größer ist als die Kapazitanz des ersten kapazitiven Elements, wobei eine maximale zulässige Spannung des ersten kapazitiven Elements höher ist als eine maximale zulässige Spannung des zweiten kapazitiven Elements, und
- einen steuerbaren Schalter (105), welcher mit dem zweiten kapazitiven Element und dem ersten Pol der kapazitiven Zwischenschaltung verbunden ist,
wobei der elektrische Leistungswandler ferner eine Regel-/Steuereinheit (106) zum Regeln/Steuern des steuerbaren Schalters derart umfasst, dass er in einem leitfähigen Zustand ist, wenn jede von einer oder mehreren vorbestimmten Bedingungen erfüllt ist, und ansonsten, dass er in einem nicht-leitfähigen Zustand ist, wobei die eine oder mehreren vorbestimmten Bedingungen wenigstens eine Anforderung umfassen, dass die erste Gleichspannung auf oder unter einem Spannungslimit ist, welches maximal die maximale zulässige Spannung des zweiten kapazitiven Elements ist, wobei die Regel-/Steuereinheit dazu eingerichtet ist, einen Referenzwert der ersten Gleichspannung wenigstens teilweise in Einklang mit der Ausgabespannung derart festzulegen, dass er einer der Folgenden ist: ein erster Referenzwert unter dem Spannungslimit, ein zweiter Referenzwert über dem Spannungslimit.

2. Elektrischer Leistungswandler nach Anspruch 1, wobei die Regel-/Steuereinheit dazu eingerichtet ist, den Referenzwert der ersten Gleichspannung auf einen aktuellen Wert einer zweiten Gleichspannung des zweiten kapazitiven Elements als eine Reaktion auf eine Situation festzulegen, in der die erste Gleichspannung auf oder unter dem Spannungslimit ist und der steuerbare Schalter in dem nicht-leitfähigen Zustand ist, wobei eine der vorbestimmten Bedingungen eine Anforderung ist, dass eine Differenz zwischen der ersten und der zweiten Gleichspannung unterhalb eines Schwellenwerts ist.

3. Elektrischer Leistungswandler nach Anspruch 1 oder 2, wobei die Regel-/Steuereinheit dazu eingerichtet ist, ein Auswahlsignal zu empfangen und den Referenzwert der ersten Gleichspannung wenigstens teilweise in Einklang mit dem Auswahlsignal derart festzulegen, dass er einer der Folgenden ist: der erste Referenzwert unter dem Spannungslimit, der zweite Referenzwert über dem Spannungslimit.

4. Elektrischer Leistungswandler nach Anspruch 1, wobei die Regel-/Steuereinheit dazu eingerichtet ist:
- den Referenzwert der ersten Gleichspannung von dem ersten Referenzwert in den zweiten Referenzwert zu ändern, wenn ein quadratisches Mittel der Ausgabespannung ansteigt und ein erstes Limit überschreitet, und
- den Referenzwert der ersten Gleichspannung von dem zweiten Referenzwert in den ersten Referenzwert zu ändern, wenn das quadratische Mittel der Ausgabespannung abnimmt und ein zweites Limit, welches von dem ersten Limit verschieden ist, überschreitet.

5. Elektrischer Leistungswandler nach einem der Ansprüche 1 - 4, wobei die Regel-/Steuereinheit dazu eingerichtet ist, den Referenzwert der ersten Gleichspannung an eine zweite Wandlerstufe (115) des elektrischen Leitungswandlers zu liefern, wobei die zweite Wandlerstufe dazu eingerichtet ist, eine von einem externen elektrischen System empfangene Spannung in die erste Gleichspannung in Einklang mit dem Referenzwert der ersten Gleichspannung zu wandeln.

6. Elektrischer Leistungswandler nach einem der Ansprüche 1 - 4, wobei die Regel-/Steuereinheit dazu eingerichtet ist, ein Regel-/Steuersignal, welches den Referenzwert der ersten Gleichspannung anzeigt, an eine externe Vorrichtung zu liefern, welche dazu eingerichtet ist, die erste Gleichspannung zu regeln/steuern.

7. Elektrischer Leistungswandler nach einem der Ansprüche 1 - 6, wobei die vorbestimmten Bedingungen eine Anforderung umfassen, dass, in Fällen, in welchen wenigstens eine Änderung des steuerbaren Schalters von dem leitfähigen Zustand in den nicht-leitfähigen Zustand stattgefunden hat, eine vorbestimmte Zeit verstrichen ist, seit einer jüngsten Änderung des steuerbaren Schalters aus dem leitfähigen Zustand in den nicht-leitfähigen Zustand.

8. Elektrischer Leistungswandler nach einem der Ansprüche 1 - 7, wobei das zweite kapazitive Element wenigstens einen elektrischen Doppelschichtkondensator EDLC umfasst.

9. Mobile Arbeitsmaschine (230), umfassend.
- einen Verbrennungsmotor (209), und
- eine elektromechanische Leistungsübertragungskette (231) zwischen dem Verbrennungsmotor und einem oder mehreren Aktuator der mobilen Arbeitsmaschine,
wobei die elektromechanische Übertragungskette wenigstens einen elektrischen Leistungswandler (201) nach einem der Ansprüche 1 - 8 umfasst.

10. Verfahren zum Regeln/Steuern eines elektrischen Leistungswandlers, welcher eine kapazitive Zwischenschaltung, wenigstens eine erste Wandlerstufe zum Wandeln einer ersten Gleichspannung zwischen ersten und zweiten Polen der kapazitiven Zwischenschaltung in wenigstens eine Ausgabespannung, welche für wenigstens eine elektrische Maschine geeignet ist, und eine zweite Wandlerstufe (115) zum Wandeln einer Spannung umfasst, welche von einem externen elektrischen System empfangen wird, in die erste Gleichspannung, wobei die kapazitive Zwischenschaltung umfasst:
- ein erstes kapazitives Element, welches mit den ersten und zweiten Polen der kapazitiven Zwischenschaltung verbunden ist,
- ein zweites kapazitives Element, welches mit dem zweiten Pol der kapazitiven Zwischenschaltung verbunden ist und eine Kapazitanz aufweist, welche größer ist als die Kapazitanz des ersten kapazitiven Elements, wobei eine maximale zulässige Spannung des ersten kapazitiven Elements höher ist als eine maximale zulässige Spannung des zweiten kapazitiven Elements, und
- einen steuerbaren Schalter, welcher mit dem zweiten kapazitiven Element und dem ersten Pol der kapazitiven Zwischenschaltung verbunden ist,
wobei das Verfahren ein Regeln/Steuern (301) des steuerbaren Schalters derart, dass er in dem leitfähigen Zustand ist, wenn jede von einer oder mehreren vorbestimmten Bedingungen erfüllt ist, und ansonsten ein Regeln/Steuern (302) des steuerbaren Schalters derart umfasst, dass er in dem nicht-leitfähigen Zustand ist, wobei die eine oder mehreren vorbestimmten Bedingungen wenigstens eine Anforderung umfassen, dass die erste Gleichspannung auf oder unter einem Spannungslimit ist, welches maximal die maximale zulässige Spannung des zweiten kapazitiven Elements ist, wobei das Verfahren ein Festlegen, wenigstens teilweise in Einklang mit der Ausgabespannung, eines Referenzwerts der ersten Gleichspannung derart umfasst, dass er einer der Folgenden ist: ein erster Referenzwert unter dem Spannungslimit, ein zweiter Referenzwert über dem Spannungslimit.

11. Verfahren nach Anspruch 10, wobei das Verfahren ein Festlegen des Referenzwerts der ersten Gleichspannung auf einen aktuellen Wert einer zweiten Gleichspannung des zweiten kapazitiven Elements als eine Reaktion auf eine Situation umfasst, in der die erste Gleichspannung auf oder unter dem Spannungslimit ist und der steuerbare Schalter in dem nicht-leitfähigen Zustand ist, wobei die vorbestimmten Bedingungen eine Anforderung umfassen, dass eine Differenz zwischen der ersten und der zweiten Gleichspannung unterhalb eines Schwellenwerts ist.

12. Verfahren nach Anspruch 10 oder 11, wobei das Verfahren ein Empfangen eines Auswahlsignals und ein Festlegen des Referenzwerts der ersten Gleichspannung wenigstens teilweise in Einklang mit dem Auswahlsignal derart umfasst, dass er einer der Folgenden ist: der erste Referenzwert unter dem Spannungslimit, der zweite Referenzwert über dem Spannungslimit.

13. Computerprogramm, umfassend Anweisungen, um den elektrischen Leistungswandler nach Anspruch 1 zu veranlassen, die Schritte des Verfahrens nach Anspruch 10 auszuführen.

## Revendications

1. Convertisseur de puissance électrique (100) comprenant un circuit intermédiaire capacitif (101), au moins un premier étage de convertisseur (102) pour convertir une première tension continue entre des premier et second pôles (107, 108) du circuit intermédiaire capacitif en au moins une tension de sortie appropriée pour au moins une machine électrique, et un second étage de convertisseur (115) pour convertir une tension reçue en provenance d'un système électrique externe en la première tension continue,
dans lequel le circuit intermédiaire capacitif (101) comprend :
- un premier élément capacitif (103) connecté aux premier et second pôles du circuit intermédiaire capacitif,
- un second élément capacitif (104) connecté au second pôle du circuit intermédiaire capacitif et ayant une capacité supérieure à une capacité du premier élément capacitif, une tension admissible maximale du premier élément capacitif étant plus élevée qu'une tension admissible maximale du second élément capacitif, et
- un commutateur commandable (105) connecté au second élément capacitif et au premier pôle du circuit intermédiaire capacitif,
le convertisseur de puissance électrique comprenant en outre un dispositif de commande (106) pour commander au commutateur commandable d'être dans un état conducteur lorsque chacune d'une ou de plusieurs conditions prédéterminées est remplie et sinon d'être dans un état non conducteur, les une ou plusieurs conditions prédéterminées comprenant au moins une exigence que la première tension continue soit sur ou en dessous d'une limite de tension qui est au plus la tension admissible maximale du second élément capacitif, dans lequel le dispositif de commande est adapté pour régler, au moins en partie selon la tension de sortie, une valeur de référence de la première tension continue pour qu'elle soit l'une des suivantes : une première valeur de référence en dessous de la limite de tension, une seconde valeur de référence au-dessus de la limite de tension.

2. Convertisseur de puissance électrique selon la revendication 1, dans lequel le dispositif de commande est adapté pour régler la valeur de référence de la première tension continue à une valeur dominante de seconde tension continue du second élément capacitif en réponse à une situation où la première tension continue est sur ou en dessous de la limite de tension et le commutateur commandable est dans l'état non conducteur, l'une des conditions prédéterminées étant une exigence qu'une différence entre les première et seconde tensions continues soit en dessous d'une valeur seuil.

3. Convertisseur de puissance électrique selon la revendication 1 ou 2, dans lequel le dispositif de commande est adapté pour recevoir un signal de sélection et pour régler, au moins en partie selon le signal de sélection, la valeur de référence de la première tension continue pour qu'elle soit l'une des suivantes : la première valeur de référence en dessous de la limite de tension, la seconde valeur de référence au-dessus de la limite de tension.

4. Convertisseur de puissance électrique selon la revendication 1, dans lequel le dispositif de commande est adapté pour :
- changer la valeur de référence de la première tension continue depuis la première valeur de référence à la seconde valeur de référence lorsqu'une moyenne quadratique de la tension de sortie augmente et dépasse une première limite, et
- changer la valeur de référence de la première tension continue depuis la seconde valeur de référence à la première valeur de référence lorsque la moyenne quadratique de la tension de sortie diminue et dépasse une seconde limite différente de la première limite.

5. Convertisseur de puissance électrique selon l'une quelconque des revendications 1 à 4, dans lequel le dispositif de commande est adapté pour délivrer la valeur de référence de la première tension continue à un second étage de convertisseur (115) du convertisseur de puissance électrique, le second étage de convertisseur étant adapté pour convertir une tension reçue en provenance d'un système électrique externe en la première tension continue selon la valeur de référence de la première tension continue.

6. Convertisseur de puissance électrique selon l'une quelconque des revendications 1 à 4, dans lequel le dispositif de commande est adapté pour délivrer un signal de commande indicatif de la valeur de référence de la première tension continue à un dispositif externe adapté pour commander la première tension continue.

7. Convertisseur de puissance électrique selon l'une quelconque des revendications 1 à 6, dans lequel les conditions prédéterminées comprennent une exigence, dans des cas où il y a eu au moins un changement du commutateur commandable de l'état conducteur à l'état non conducteur, qu'un temps prédéterminé se soit écoulé depuis un changement le plus récent du commutateur commandable de l'état conducteur à l'état non conducteur.

8. Convertisseur de puissance électrique selon l'une quelconque des revendications 1 à 7, dans lequel le second élément capacitif comprend au moins un condensateur à double couche électrique EDLC.

9. Machine de travail mobile (230) comprenant :
- un moteur à combustion (209), et
- une chaîne de transmission de puissance électromécanique (231) entre le moteur à combustion et un ou plusieurs actionneurs de la machine de travail mobile,
dans laquelle la chaîne de transmission électromécanique comprend au moins un convertisseur de puissance électrique (201) selon l'une quelconque des revendications 1 à 8.

10. Procédé de commande d'un convertisseur de puissance électrique qui comprend un circuit intermédiaire capacitif, au moins un premier étage de convertisseur pour convertir une première tension continue entre des premier et second pôles du circuit intermédiaire capacitif en au moins une tension de sortie appropriée pour au moins une machine électrique, et un second étage de convertisseur (115) pour convertir une tension reçue en provenance d'un système électrique externe en la première tension continue,
dans lequel le circuit intermédiaire capacitif comprend :
- un premier élément capacitif connecté aux premier et second pôles du circuit intermédiaire capacitif,
- un second élément capacitif connecté au second pôle du circuit intermédiaire capacitif et ayant une capacité supérieure à une capacité du premier élément capacitif, une tension admissible maximale du premier élément capacitif étant plus élevée qu'une tension admissible maximale du second élément capacitif, et
- un commutateur commandable connecté au second élément capacitif et au premier pôle du circuit intermédiaire capacitif,
le procédé comprenant la commande (301) au commutateur commandable d'être dans un état conducteur lorsque chacune d'une ou de plusieurs conditions prédéterminées est remplie et sinon la commande (302) au commutateur commandable d'être dans un état non conducteur, les une ou plusieurs conditions prédéterminées comprenant au moins une exigence que la première tension continue soit sur ou en dessous d'une limite de tension qui est au plus la tension admissible maximale du second élément capacitif, dans lequel le procédé comprend le réglage, au moins en partie selon la tension de sortie, d'une valeur de référence de la première tension continue pour qu'elle soit l'une des suivantes : une première valeur de référence en dessous de la limite de tension, une seconde valeur de référence au-dessus de la limite de tension.

11. Procédé selon la revendication 10, dans lequel le procédé comprend le réglage de la valeur de référence de la première tension continue à une valeur dominante d'une seconde tension continue du second élément capacitif en réponse à une situation où la première tension continue est sur ou en dessous de la limite de tension et le commutateur commandable est dans l'état non conducteur, les conditions prédéterminées comprenant une exigence qu'une différence entre les première et seconde tensions continues soit en dessous d'une valeur seuil.

12. Procédé selon la revendication 10 ou 11, dans lequel le procédé comprend la réception d'un signal de sélection et le réglage, au moins en partie selon le signal de sélection, de la valeur de référence de la première tension continue pour qu'elle soit l'une des suivantes : la première valeur de référence en dessous de la limite de tension, la seconde valeur de référence au-dessus de la limite de tension.

13. Programme d'ordinateur comprenant des instructions pour amener le convertisseur de puissance électrique de la revendication 1 à exécuter les étapes du procédé de la revendication 10.
